# EUROPÄISCHE PATENTSCHRIFT

(11) **EP 1 848 773 B1**
(45) Veröffentlichungstag und Bekanntmachung des Hinweises auf die Patenterteilung: **08.10.2008**
(21) Anmeldenummer: 06700042.2
(22) Anmeldetag: 04.01.2006
(51) Int. Cl.: C08L 77/02, C08L 77/06

(54) **FOLIE AUF BASIS EINES POLYAMIDBLENDS**
POLYAMIDE BLEND FILM
FEUILLE A BASE D'UN MELANGE DE POLYAMIDES

(30) Priorität: 19.02.2005 DE 102005007665
(43) Veröffentlichungstag der Anmeldung: 31.10.2007
(73) Patentinhaber: Evonik Degussa GmbH, 45128 Essen (DE)
(72) Erfinder: WURSCHE, Roland, 48249 Dülmen (DE); BOLLMANN, Sonja, 45721 Haltern Am See (DE); HÄGER, Harald, 59348 Lüdinghausen (DE); WIELPÜTZ, Martin, 48308 Senden (DE); ALTING, Kirsten, 48153 Münster (DE); BEYER, Michael, 46348 Raesfeld (DE); BAUMANN, Franz-Erich, 48249 Dülmen (DE)
(86) Internationale Anmeldenummer: PCT/EP2006/050038
(87) Internationale Veröffentlichungsnummer: WO 2006/087250

(56) Entgegenhaltungen:
- EP-A- 0 568 988
- WO-A-92/12008
- US-A1- 2002 179 888

## Beschreibung

Die vorliegende Erfindung hat eine Folie zum Gegenstand, die eine Schicht aus einem Polyamidblend enthält und zur Dekoration von Formteilen geeignet ist.

Das derzeitige Standardverfahren zur Dekoration von Außenflächen an Automobilen ist das Lackieren. Diese Vorgehensweise verursacht jedoch zum einen hohe Fertigungskosten, die durch die Vorhaltung eines spezifischen Maschinenparks und den damit verbundenen Bedienaufwand beim Automobilhersteller bedingt sind, zum anderen wird hierdurch die Umwelt belastet. Eine Umweltbelastung resultiert beispielsweise aus freiwerdenden Lösungsmittelbestandteilen der eingesetzten Lacke sowie aus dem Anfall von Farbresten, die einer geordneten Entsorgung zugeführt werden müssen.

Ferner kommt hinzu, dass das Lackieren nur in begrenztem Maße geeignet ist, die Oberflächen von Kunststoffbauteilen zu dekorieren, die in den letzten Jahren im Automobilbau wegen der Gewichts- und Kostenersparnis an Beliebtheit gewonnen haben.

Der Lackierprozess von Kunststoffbauteilen als Komponenten der Karosserie ist beispielsweise on-line führbar, wobei das Kunststoffteil der gleichen Lackierbehandlung unterzogen wird wie die metallischen Komponenten. Dies führt zu einer einheitlichen Farbe, bringt aber infolge der hier üblichen kathodischen Tauchlackierung hohe Temperaturen mit sich, die die Materialauswahl erschweren. Außerdem muss eine Haftung der Lackrezeptur in gleicher Weise auf den sehr unterschiedlichen Substraten gewährleistet sein. Wird der Lackierprozess der Kunststoffteile in einem separaten Schritt (sogenannte off-line-Laclderung) durchgeführt, der für Kunststoffe günstigere Prozessbedingungen beinhaltet, tritt die Problematik des colormatching auf, das heißt, der am Metall realisierte Farbton muss genau getroffen werden. Dies ist jedoch aufgrund der Unterschiede in Substrat, verwendbarer Basislackrezeptur und Prozessbedingungen sehr schwierig zu erreichen. Im Falle einer durch das Design vorgegebenen Farbdifferenz bleibt als gravierender Nachteil die Vorhaltung einer zweiten Lackiereinrichtung für die Kunststoffteile und der damit verbundene Aufwand, wobei auch ein zusätzlicher Zeitbedarf für die Fertigung des Automobils einzubeziehen ist. Die direkte Verwendung der unbehandelten, in der Regel spritzgegossenen Kunststoffteile ist unter ästhetischen Gesichtspunkten unvorteilhaft, da hier prozessbedingte Fehler der Oberfläche, wie etwa Bindenähte, Lufteinschlüsse, aber auch notwendige verstärkende Füllstoffe wie Glasfasern deutlich wahrnehmbar sind. Dies ist im Sichtbereich nicht tolerabel. Folglich muss eine Verbesserung der Oberflächenqualität vorgenommen werden, beispielsweise im Zuge einer Lackierung, wobei oft eine arbeitsintensive Vorbehandlung durch Schleifen und die Aufbringung eines Primers in dickeren Schichten nötig wird.

Ein Vorschlag zur Abhilfe besteht in der Verwendung von mehrschichtigen Kunststofffolien, die zur Abdeckung der Bauteile eingesetzt werden und nicht mehr lackiert werden müssen. Der Verbund zwischen Substrat und dekorierender Folie kann hierbei durch eine Reihe von Fertigungsverfahren realisiert werden. Die Folie kann beispielsweise mit dem Substrat verpresst werden oder man wählt ein Hinterspritzverfahren, bei dem die Folie bei der Bauteilherstellung in das Spritzgießwerkzeug eingelegt wird. Das Konzept einer Folie als Dekorträger kommt darüber hinaus einem Trend zur Individualisierung gestalterischer Elemente am Automobil entgegen. Diese Tendenz führt nämlich in der Fertigung zu einer größeren Palette von Modellen, die aber in der Anzahl der jeweils gefertigten Bauteile pro Serie reduziert ist. Da der Einsatz von Folien schnelle, problemlose Designwechsel erlaubt, kann dieser Herausforderung hiermit begegnet werden. Wichtig ist hierbei, dass durch die Folie die in der Automobilindustrie geforderten Standards hinsichtlich Oberflächeneigenschaften (Class A Oberfläche), Beständigkeit gegenüber Medien und optischem Eindruck erfüllt werden. Auch in der Gestaltung von Innenoberflächen im Automobil sind solche Folien gut einsetzbar.

Derartige Dekorfolien sind im Prinzip bekannt. Die EP 0 949 120 A1 beispielsweise beschreibt Dekorfolien mit einer transparenten Deckschicht aus Polyurethan, Polyacrylat, Fluorpolymer oder Mischungen aus Fluorpolymer und Polyacrylat. Ähnliche Dekorfolien sind auch aus der WO 94/03337 und der EP 0 285 071 A2 bekannt.

Ein anderes Anwendungsgebiet für Dekorfolien sind Dekorträger etwa für Oberbeläge von Sportgeräten wie zum Beispiel Skier oder Snowboards bzw. von Haushaltsartikeln. Hier werden häufig einschichtige Folien eingesetzt, die auf der Ober- oder Unterseite bedruckt sind. So beschreibt das Gebrauchsmuster DE 295 19 867 U1 eine dekorierbare Folie aus einem Copolyamid, das aus den Monomereinheiten Laurinlactam sowie Caprolactam und/oder Hexamethylendiamin/Dicarbonsäure aufgebaut ist. Im Artikel von M. Beyer und J. Lohmar, Kunststoffe 90 (2000) 1, S. 98 - 101 werden Beispiele für bedruckbare Folien aus PA12-Formmassen angegeben.

Aufgrund ihres Eigenschaftsprofils, beispielsweise Schlagzähigkeit und Chemikalienbeständigkeit, sind Polyamide, insbesondere Polyamide auf Basis von PA12 oder PA11, ganz allgemein für die Herstellung derartiger Dekorfolien gut geeignet. Dementsprechend finden sich in der Patentliteratur Beschreibungen von Dekorfolien oder auch Schutzfolien, die eine Deckschicht aus einem Polyamid enthalten. Zu nennen sind hier beispielsweise die Schriften JP60155239A, JP2003118055A, EP 1 302 309 A, EP 0 522 240 A, EP 0 694 377 A, EP 0 734 833 A, WO 9212008 A und EP 0 568 988 A.

Während Deckschichten aus Polyamiden mit hoher Carbonamidgruppendichte aufgrund der hohen Polarität eine ungenügende Chemikalienbeständigkeit und zu hohe Wasseraufnahme besitzen, zeigt sich in der Praxis, dass bei der Verwendung von Polyamiden mit niedriger Carbonamidgruppendichte, die aus Lactamen bzw. den entsprechenden Aminocarbonsäuren hergestellt wurden (AB-Polyamide), unter Umgebungsbedingungen im Laufe der Zeit Beläge auf der Oberfläche der Folien gebildet werden, die den Glanz erheblich herabsetzen und für diese Anwendung nicht tolerierbar sind. Zudem wäre eine Verbesserung der Transparenz und des Anfangsglanzes wünschenswert. Verwendet man dagegen Polyamide aus Diamin und Dicarbonsäure (AABB-Polyamide) mit niedriger Dichte an Carbonamidgruppen, so bilden sich keine Beläge, aber auch hier wäre eine Verbesserung bei Transparenz und Glanz vorteilhaft.

Es bestand folglich die Aufgabe, eine Folie zu Dekorzwecken zur Verfügung zu stellen, bei der eine verringerte Belagsbildung auftritt, deren Deckschicht ausreichend transparent ist und die einen hohen Anfangsglanz aufweist.

Diese Aufgabe wird durch eine Folie gelöst, deren Deckschicht aus einer Formmasse besteht, die im wesentlichen aus folgenden Komponenten besteht:
a) 3 bis 50 Gew.-%, bevorzugt 4 bis 49 Gew.-%, besonders bevorzugt 5 bis 47 Gew.-% und insbesondere bevorzugt 10 bis 45 Gew.-% eines Polyamids, ausgewählt aus der Gruppe PA11 und PA 12, sowie
b) 50 bis 97 Gew.-%, bevorzugt 51 bis 96 Gew.-%, besonders bevorzugt 53 bis 95 Gew.-% und insbesondere bevorzugt 55 bis 90 Gew.-% eines Polyamids, ausgewählt aus der Gruppe PA1012 und PA1212,
wobei die Prozentangaben sich auf die Summe der Komponenten a) und b) beziehen.

Die eingesetzten Polyamide und ihre Herstellung sind bekannt. Sie sind in einer Vielzahl von Handelstypen kommerziell erhältlich. Erfindungsgemäß werden in erster Linie die jeweiligen Homopolyamide verwendet, jedoch sind auch darauf basierende Copolyamide einsetzbar, die maximal 20 Mol-%, maximal 15 Mol-%, maximal 10 Mol-% oder maximal 5 Mol-% an Comonomeren eingebaut enthalten. Geeignete Comonomere sind Lactame, die entsprechenden Aminocarbonsäuren oder die Kombination aus Diamin und Dicarbonsäure. Bei der Berechnung der Zusammensetzung werden Diamin und Dicarbonsäure jeweils einzeln gezählt.

Der Einbau von Comonomeren führt zu verbesserter Transparenz und zu höherem Glanz, jedoch wird die Beständigkeit gegenüber Chemikalien und Umwelteinflüssen etwas verschlechtert. Letzteres kann in Kauf genommen werden, wenn es gelingt, mit Hilfe der Comonomeren eine bessere Verträglichkeit etwa zur nachfolgenden Schicht oder zum Substrat zu erzielen, indem die Zusammensetzung etwas angenähert wird.

Die Formmasse wird aus den einzelnen Komponenten entsprechend dem Stand der Technik durch Schmelzemischen hergestellt. Sie kann zusätzlich folgende weitere Komponenten enthalten:
a) Nukleierungsmittel, ausgewählt aus nanoskaligen Füllstoffen und basischen Metallsalzen, Metalloxiden oder Metallhydroxiden; letztere werden, um die gewünschte Transparenz sicherzustellen, höchstens in einer solchen Menge zugesetzt, wie sie in der Schmelze unter Reaktion mit den Carboxylendgruppen der Polyamide gelöst werden können;
b) übliche Hilfs- bzw. Zusatzstoffe in den für Polyamidformmassen üblichen Mengen, beispielweise Stabilisatoren oder Gleitmittel,
c) Farbmittel, die die Transparenz nicht signifikant beeinflussen,
d) Füllstoffe, deren Brechungsindex sich nur in geringem Maße von dem der Matrix unterscheidet oder genau übereinstimmt (isorefraktive Füllstoffe) sowie
e) weitere Polymerkomponenten, deren Brechungsindex sich nur in geringem Maße von dem der Matrix unterscheidet oder genau übereinstimmt.

Diese weiteren Komponenten sind in der Formmasse vorzugsweise zu maximal 30 Gew.%, maximal 25 Gew.-%, maximal 20 Gew.-%, maximal 15 Gew.-%, maximal 10 Gew.-% bzw. maximal 5 Gew.-% enthalten.

Überraschenderweise bleibt dann, wenn die Formmasse maximal 50 Gew.-% des AB-Polyamids (PA11 bzw. PA12) enthält, wie bei den reinen AABB-Polyamiden der Glanz während der Gebrauchsdauer erhalten, obwohl dies angesichts des Mischungsverhältnisses der Polyamide so nicht zu erwarten ist. Offenbar wird die Diffusion der im AB-Polyamid enthaltenen belagsbildenden Stoffe, möglicherweise cyclische Oligomere, durch das AABB-Polyamid verhindert, sobald dieses zu mindestens 50 Gew.-% vorliegt. Ein weiterer Vorteil ist hierbei, dass die Mischung der teilkristallinen Polyamide zu Blends führt, die teilkristallin, aber ausreichend transparent sind. Transparenz und Anfangsglanz liegen über dem Niveau der reinen Komponenten, während die Beständigkeit gegenüber Chemikalien und Umwelteinflüssen erhalten bleibt. Explizit seien hier die Kombinationen PA11/PA1012, PA11/PA1212, PA12/PA1012 und PA12/PA1212 genannt, jedoch können darüber hinaus, unabhängig voneinander, die AB-Komponente eine Mischung von PA11 und PA12 und die AABB-Komponente eine Mischung von PA1012 und PA1212 darstellen.

Die Folie ist einschichtig oder mehrschichtig. Bei einer mehrschichtigen Ausführung richten sich die Art und Zahl der übrigen Schichten nach den anwendungstechnischen Erfordernissen; entscheidend ist nur, dass die Deckschicht aus der erfindungsgemäß verwendeten Formmasse besteht. Beispielsweise sind folgende Ausführungsformen möglich:
1. Die Folie ist einschichtig. Sie besteht in diesem Fall definitionsgemäß nur aus der Deckschicht; durch Bedrucken z. B. mittels Thermosublimationsdruck können entweder auf der Oberseite oder der Unterseite Dekore angebracht werden.
2. Die Folie enthält neben der Deckschicht eine untenliegende Farbschicht. Die Farbschicht kann eine Lackschicht sein; sie besteht aber, dem Stand der Technik entsprechend, bevorzugt aus einer eingefärbten Thermoplastschicht. Der Thermoplast kann beispielsweise die gleiche oder eine ähnliche Mischung wie die der Deckschicht sein, eine Komponente hiervon oder ein anderes Polyamid bzw. ein anderes Polymeres, das entweder direkt auf der Deckschicht haftet oder mit Hilfe eines ausreichend transparenten Haftvermittlers (beispielsweise ein mit Carboxyl- bzw. Säureanhydridgruppen oder mit Epoxidgruppen funktionalisiertes Polyolefin, ein thermoplastisches Polyurethan oder ein Blend aus den Bestandteilen der zu verbindenden Schichten) haftend verbunden ist. Als Farbmittel können z. B. organische Farbstoffe, anorganische bzw. organische Pigmente oder Metallflitter eingesetzt werden.
3. Die Folie enthält neben Deckschicht und gegebenenfalls Farbschicht eine weitere Schicht, die als Trägerschicht eine ausreichende mechanische Festigkeit und gegebenenfalls zusätzlich eine Anbindung an das Substrat bewirkt.
4. Die Folie enthält neben Deckschicht und gegebenenfalls Farbschicht noch eine untenliegende Haftvermittlerschicht zur Anbindung an das Substrat. Geeignete Haftvermittler sind beispielsweise ein mit Carboxyl- bzw. Säureanhydridgruppen oder mit Epoxidgruppen funktionalisiertes Polyolefin, ein thermoplastisches Polyurethan, ein Blend aus den Materialien der zu verbindenden Schicht und des Substrats oder einer der in der deutschen Patentanmeldung Nr. 102004029217.5 vom 16.06.2004 offenbarten Haftvermittler.
5. Die Folie enthält neben Deckschicht, gegebenenfalls Farbschicht und Trägerschicht noch eine untenliegende Haftvermittlerschicht zur Anbindung an das Substrat. Für den Haftvermittler gilt das gleiche wie unter Punkt 4.
6. Die Folie, z. B. eine unter Punkt 1 bis 5, enthält bei Bedarf, z. B. bei erhöhten Anforderungen an die Kratzfestigkeit, auf der Deckschicht noch eine Schutzschicht, beispielsweise einen Klarlack auf Polyurethanbasis. Eine Schutzschicht in Form eines Lackes kann zur Erhöhung der Kratzfestigkeit gemäß dem Stand der Technik auch modifiziert sein. Daneben ist es auch möglich, auf dem Bauteil eine Schutzschicht über Verfahren der Vakuumabscheidung zu generieren. Die Folie kann gegebenenfalls auch eine abziehbare Schutzfolie auflaminiert enthalten, die als Transport- oder Montageschutz wirkt und nach der Herstellung des Verbundteils abgezogen wird.

Für die Ausführungsformen 2 bis 6 gilt, dass zunächst die transparente Deckschicht wie eine Monofolie von einer Seite oder von beiden Seiten her bedruckt werden kann, um dann in einem zweiten Schritt mit den übrigen Schichten zur Mehrschichtfolie verbunden zu werden. In mehrschichtigen Folien kann die transparente Deckschicht von oben her bedruckt werden. Die Deckschicht kann auch transparent oder deckend eingefärbt sein.

In einer bevorzugten Ausführungsform enthält die Farbschicht und/oder die Trägerschicht eine Formmasse insbesondere eines Polyetheramids oder eines Polyetheresteramids und vorzugsweise eines Polyetheramids oder Polyetheresteramids auf Basis eines linearen aliphatischen Diamins mit 6 bis 18 und bevorzugt 6 bis 12 C-Atomen, einer linearen aliphatischen oder einer aromatischen Dicarbonsäure mit 6 bis 18 und bevorzugt 6 bis 12 C-Atomen und eines Polyethers mit mehr als durchschnittlich 2,3 C-Atomen pro Sauerstoffatom und einer zahlenmittleren Molmasse der Polyetherblöcke von 200 bis 2 000. Die Formmasse dieser Schicht kann weitere Blendkomponenten enthalten wie z. B. Polyacrylate oder Polyglutarimide mit Carboxyl- bzw. Carbonsäureanhydridgruppen oder Epoxidgruppen, einen funktionelle Gruppen enthaltenden Kautschuk und/oder ein Polyamid. Derartige Formmassen sind Stand der Technik; sie sind beispielsweise in der EP 1 329 481 A2 und der DE-OS 103 33 005 beschrieben, auf die hier ausdrücklich Bezug genommen wird. Um eine gute Schichtenhaftung zu gewährleisten, ist es vorteilhaft, wenn hier der Polyamidanteil des Polyamidelastomeren aus den gleichen Monomeren aufgebaut ist, wie sie in einer der Komponenten der Deckschicht verwendet werden. Alternativ zum Polyamidelastomeren kann die Farbschicht und/oder die Trägerschicht neben einem Polyamid auch einen üblichen schlagzähmachenden Kautschuk enthalten. Vorteilhaft an diesen Ausführungsformen ist, dass in vielen Fällen ein Thermoformen der Folie als separater Schritt vor dem Hinterspritzen nicht notwendig ist, da die Folie durch das Hinterspritzen gleichzeitig auch umgeformt wird.

Die Folie bzw. Mehrschichtfolie mit der erfindungsgemäßen Deckschicht hat in einer bevorzugten Ausführungsform eine Dicke von 0,02 bis 1,2 mm, besonders bevorzugt von 0,05 bis 1 mm, ganz besonders bevorzugt von 0,1 bis 0,8 mm und insbesondere bevorzugt von 0,2 bis 0,6 mm. Handelt es sich um eine mehrschichtige Folie, besitzt die erfindungsgemäße Deckschicht in einer bevorzugten Ausführungsform eine Dicke von 0,01 bis 0,5 mm, besonders bevorzugt von 0,02 bis 0,3 mm, ganz besonders bevorzugt von 0,04 bis 0,2 mm und insbesondere bevorzugt von 0,05 bis 0,15 mm. Die Folie wird mittels bekannter Methoden hergestellt, beispielsweise durch Extrusion, oder im Falle von mehrschichtigen Systemen durch Coextrusion oder Laminieren. Sie kann anschließend gegebenenfalls umgeformt werden.

In einer Ausführungsform ist die Folie eine Dekorfolie. Dekorfolien im Sinne der Erfindung sind Folien, die bedruckt werden können und/oder eine Farbschicht enthalten und darüber hinaus dazu bestimmt sind, mit einem Substrat verbunden zu werden, um dessen Oberfläche zu dekorieren. Die Dekoration kann auch dadurch bewirkt werden, dass optische Mängel der Oberfläche kaschiert werden, z. B. indem eine von Füll- oder Verstärkungsstoffen herrührende Oberflächenrauhigkeit abgedeckt wird.

Die stoffschlüssige Verbindung der Folie mit dem Substrat kann beispielsweise durch Verkleben, Verpressen, Laminieren, Coextrusion, Hinterspritzen, Hinterschäumen oder Hinterpressen hergestellt werden. Zum Erreichen einer verbesserten Haftung kann die Folie zuvor beispielsweise beflammt oder mit einem Plasma behandelt werden. Vor der Bildung des Verbundes zwischen Folie und Substrat kann die Folie noch bearbeitet oder umgeformt werden, beispielsweise durch Thermoformen oder andere Verfahren. Die Oberfläche kann beispielsweise durch Prägen strukturiert werden. Eine Strukturierung der Oberfläche ist auch vorgelagert im Rahmen der Folienextrusion möglich, beispielsweise durch speziell gestaltete Walzen. Das erhaltene Verbundteil kann anschließend noch umgeformt werden.

Geeignete Substrate sind beispielsweise Formmassen basierend auf Polyolefinen, Polyamiden, Polyestern, Polycarbonaten, ABS, Polystyrol oder Styrolcopolymeren.

In einer bevorzugten Ausführungsform wird die erfindungsgemäße Folie als Deckschicht eines Folienverbundes zur Gestaltung bzw. Dekoration von Oberflächen an und in Automobilen und Nutzfahrzeugen verwendet, wobei die Folie haftend mit einem Kunststoff-Substrat verbunden ist. Das entsprechend gestaltete Bauteil kann flächig ausgeformt sein, wie etwa ein Karosserieteil, beispielsweise Dachmodul, Kotflügel, Motorhaube oder Tür. Daneben kommen auch Ausführungsformen in Frage, in denen längliche, mehr oder weniger gewölbte Bauteile erzeugt werden, etwa Verkleidungen, beispielsweise die Verkleidung sogenannter A-Säulen am Automobil oder Zier- und Blendleisten aller Art. Ein weiteres Beispiel sind Schutzverkleidungen für Türschwellen. Neben Anwendungen im Außenbereich des Kraftfahrzeuges können auch Bestandteile des Interieurs vorteilhaft durch die erfindungsgemäßen Folien dekoriert werden, insbesondere Zierelemente wie Leisten und Blenden, da auch im Innenraum Schlagzähigkeit und Beständigkeit gegenüber Chemikalien, beispielsweise Reinigungsmitteln, erforderlich ist.

In einer weiteren bevorzugten Ausführungsform wird die erfindungsgemäße Folie als Oberbelag für Schneebretter aller Art, wie Skier oder Snowboards, verwendet.

Die Folie kann darüber hinaus beispielsweise als Schutzfolie gegen Verschmutzung, UV-Strahlung, Witterungseinflüsse, Chemikalien oder Abrieb verwendet werden, als Sperrfolie an Fahrzeugen, im Haushalt, an Böden, Tunnels, Zelten und Gebäuden oder als Dekorträger etwa für Oberbeläge von Sportgeräten, Booten, Flugzeugen, im Haushalt oder an Gebäuden.

Die Erfindung wird nachfolgend beispielhaft illustriert.

Das eingesetzt PA12 war ein Typ mit einer relativen Lösungsviskosität ηᵣₑₗ, bestimmt gemäß ISO 307, von 2,1 und einem Kristallitschmelzpunkt Tₘ, bestimmt gemäß ISO 11357, von 178 °C.

Das eingesetzte PA1012 war ein Typ mit einer relativen Lösungsviskosität ηᵣₑₗ von 1,9 und einem Kristallitschmelzpunkt Tₘ von 191 °C.

Die Herstellung der Formmasse erfolgte durch Schmelzemischen auf einem Zweischneckenextruder des Typs Werner + Pfleiderer ZSK M9/2. Die Zylindertemperatur betrug 250 °C bei einer Drehzahl von 250 U/min und einem Durchsatz von 10 kg/h. Es wurde eine 25 µ-Schmelzefiltration vorgenommen.

Die Herstellung von Spritzgussplatten erfolgte auf einer Spritzgussmaschine des Typs Engel ES 600/150. Die Massetemperatur betrug 250 °C, die Werkzeugtemperatur lag bei 80 °C. Es wurden Platten mit den Dimensionen 130 mm x 130 mm x 1 mm hergestellt.

Monofolien wurden auf einer Collin-Mehrschichtfolienanlage des Typs Kalander 168/400 bei einer Verarbeitungstemperatur von 240 °C nach dem Kalanderverfahren hergestellt. Die Dicke betrug 400 µm.

Mehrschichtfolien wurden auf einer Collin-Mehrschichtfolienanlage des Typs Kalander 168/400 bei einer Verarbeitungstemperatur von 240 °C (Deckschicht) und 240 - 250 °C (Farbschicht) nach dem Kalanderverfahren hergestellt. Die Dicke der Deckschicht betrug 100 µm, die Dicke der Farbschicht 400 µm. Als farbtragende Schicht wurde ein Blend aus 28,0 Gew.-% PA12 (ηᵣₑₗ = 2,1), 68,5 Gew.-% eines Polyetheresteramids mit PA12-Hartblöcken (Mₙ = 7000) und PTHF-Weichblöcken (Mₙ = 1000), 2,0 Gew.-% eines Stabilisatorbatches sowie 1,5 Gew.-% Farbpulverbatch mit Farbeinstellung E70237 verwendet.

Die Schnellbewitterung erfolgte an Monofolien mit einem Schnellbewitterungsgerät Q-UV/se der Firma Q-Panel mit Zyklus (Step 1: 55 °C, Belichtung 0,98 W/m² bei 340 nm, 4 h/Step 2: 45 °C, Betauung ohne Belichtung, 4 h).

Die Klimalagerung erfolgte an Spritrgussplatten bei 85°C und 99 % relativer Luftfeuchtigkeit in einem Klimaschrank.

Die Glanzmessungen wurden an Platten und Folien nach DIN 67 530 durchgeführt.

Die Transmission wurde an Folien der Dicke 400 µm nach ISO 13468-2 gemessen.

### Beispiele 1 - 4 und Vergleichsbeispiele A - E:

Zusammensetzungen und Ergebnisse gehen aus den Tabellen 1 bis 5 hervor.

**Tabelle 1: Zusammensetzung der Deckschicht**

| **Beispiel** | **PA1012 (Gew.-Teile)** | **PA12 (Gew.-Teile)** | **Stabilisatoren (Gew.-Teile)** |
|---|---|---|---|
| A | 100 | | |
| B | | 100 | |
| C | 20 | 80 | |
| 1 | 60 | 40 | |
| 2 | 80 | 20 | |
| D | 20 | 80 | 0,8 |
| E | 40 | 60 | 0,8 |
| 3 | 60 | 40 | 0,8 |
| 4 | 80 | 20 | 0,8 |

**Tabelle 2: Transparenz an Monofolien (400 µm)**

| **Beispiel** | **A** | **B** | **C** | **1** | **2** |
|---|---|---|---|---|---|
| Transparenz (bei 500 nm) | 88,2 % | 87,6 % | 89,4% | 89,8% | 89,1 % |

**Tabelle 3: Belagsbildung bei Schnellbewitterung (Messung des Glanzes bei 60° an 400 µm-5 Folien; Angaben in Glanzeinheiten)**

| **Dauer (h)** | **A** | **B** | **3** | **4** | **D** | **E** |
|---|---|---|---|---|---|---|
| 0^{a}) | 126 | 97 | 131 | 129 | 116 | 115 |
| 24 | 124 | 78 | 127 | 131 | 107 | 80 |
| 168 | 120 | 84 | 126 | 130 | 100 | 98 |
| 336 | 118 | 60 | 121 | 131 | 78 | 92 |
| 504 | 120 | 58 | 120 | 132 | 82 | 91 |
| 672 | 125 | 69 | 119 | 133 | 81 | 94 |
| 840 | | | 120 | 132 | 83 | 87 |
| 1008 | | | 118 | 131 | 78 | 92 |
| 1176 | | | 120 | 132 | 75 | 89 |
| 1344 | | | 120 | 131 | 70 | 92 |
| 1512 | | | 120 | 132 | 67 | 95 |
| 1680 | | | 121 | 132 | 68 | 97 |
| 2016 | | | 117 | 134 | 75 | 88 |
| 2352 | | | 119 | 129 | 72 | 67 |
| 3192 | | | 116 | 126 | | |

| | | | | | | |
|---|---|---|---|---|---|---|
| ^{a)} Anfangsglanz | | | | | | |

**Tabelle 4: Belagsbildung bei Feuchtlagerung (Messung des Glanzes bei 85° an Platten; Angaben in Glanzeinheiten)**

| **Lagerdauer in Tagen** | **A** | **3** | **4** | **D** | **E** |
|---|---|---|---|---|---|
| 0 | 94,7 | 101,4 | 94,9 | 102,8 | 100,7 |
| 3 | 98 | 102,3 | 99,2 | 96,6 | 101,1 |
| 6 | 98,4 | 101,4 | 98,3 | 58,8 | 88,8 |
| 10 | 97,7 | 101,8 | 99,2 | 59,1 | 89,5 |
| 14 | 97,6 | 102,2 | 99,5 | 53,9 | 84,6 |
| 21 | 97,1 | 101,3 | 98,7 | 33,3 | 77,4 |
| 25 | 96,3 | 101,4 | 98,3 | 41,9 | 75,1 |
| 32 | 96,1 | 101,3 | 98,1 | 26,4 | 61 |
| 39 | 95,7 | 100,4 | 97,6 | 17 | 56,1 |
| 46 | 97,4 | 103,6 | 100,5 | 14,7 | 45,5 |
| 52 | 94,5 | 100,2 | 98,5 | 15 | 44,1 |

**Tabelle 5: Mehrschichtfolie, Anfangsglanz bei 20° (Angabe in Glanzeinheiten)**

| **Beispiel** | **D** | **3** | **4** |
|---|---|---|---|
| Glanz | 80 | 84 | 85 |

## Patentansprüche

1. Folie, deren Deckschicht aus einer Formmasse besteht, die im wesentlichen aus folgenden Komponenten besteht:
a) 3 bis 50 Gew.-% eines Polyamids, ausgewählt aus der Gruppe PA11 und PA12, sowie
b) 50 bis 97 Gew.-% eines Polyamids, ausgewählt aus der Gruppe PA1012 und PA1212,
wobei die Prozentangaben sich auf die Summe der Komponenten a) und b) beziehen.

2. Folie gemäß Anspruch 1, die nur aus dieser Schicht besteht.

3. Folie gemäß Anspruch 1, die aus mehreren Schichten besteht.

4. Folie gemäß Anspruch 3,
**dadurch gekennzeichnet,**
**dass** sie eine Farbschicht, eine Trägerschicht und/oder eine Haftvermittlerschicht enthält.

5. Folie gemäß Anspruch 4,
**dadurch gekennzeichnet,**
**dass** die Farbschicht und/oder die Trägerschicht ein Polyamidelastomer oder einen schlagzähmachenden Kautschuk enthält.

6. Folie gemäß einem der vorhergehenden Ansprüche,
**dadurch gekennzeichnet,**
**dass** sie eine Dicke von 0,02 bis 1,2 mm aufweist.

7. Folie gemäß einem der Ansprüche 1 sowie 3 bis 6,
**dadurch gekennzeichnet,**
**dass** die Deckschicht eine Dicke von 0,01 bis 0,5 mm aufweist.

8. Folie gemäß einem der Ansprüche 1 bis 7,
**dadurch gekennzeichnet,**
**dass** sie durch Extrusion, Coextrusion oder Laminieren hergestellt und anschließend gegebenenfalls umgefomt wird.

9. Verwendung einer Formmasse, die im wesentlichen aus folgenden Komponenten besteht:
a) 3 bis 50 Gew.-% eines Polyamids, ausgewählt aus der Gruppe PA11 und PA12, sowie
b) 50 bis 97 Gew.-% eines Polyamids, ausgewählt aus der Gruppe PA1012 und PA1212,
wobei die Prozentangaben sich auf die Summe der Komponenten a) und b) beziehen,
zur Herstellung einer Folie gemäß einem der Ansprüche 1 bis 8.

10. Verbundteil, zusammengesetzt aus einer Folie gemäß einem der Ansprüche 1 bis 8 und einem Substrat.

11. Verbundteil gemäß Anspruch 10,
**dadurch gekennzeichnet,**
**dass** es ein Karosserieteil eines Kraftfahrzeuges, ein Bestandteil des Kraftfahrzeug-Innenraumes, eine Verkleidung, eine Zierleiste, eine Blendleiste, eine Blende oder ein Dekorationselement ist.

12. Verbundteil gemäß einem der Ansprüche 10 und 11,
**dadurch gekennzeichnet,**
**dass** es durch Verkleben, Verpressen, Laminieren, Coextrusion, Hinterspritzen, Hinterschäumen oder Hinterpressen hergestellt wird.

## Claims

1. Foil whose outer layer is composed of a molding composition which is in essence composed of the following components:
a) from 3 to 50% by weight of a polyamide, selected from the group of PA11 and PA12, and
b) from 50 to 97% by weight of a polyamide, selected from the group of PA1012 and PA1212,
where the percentages are based on the entirety of components a) and b).

2. Foil according to Claim 1, which is composed only of that layer.

3. Foil according to Claim 1, which is composed of two or more layers.

4. Foil according to Claim 3,
**characterized in that** it
comprises a color layer, a carrier layer, and/or an adhesion-promoter layer.

5. Foil according to Claim 4,
**characterized in that**
the color layer and/or the carrier layer comprises a polyamide elastomer or an impact-modifying rubber.

6. Foil according to any of the preceding claims,
**characterized in that** it has a
thickness from 0.02 to 1.2 mm.

7. Foil according to any of Claims 1 or 3 to 6,
**characterized in that**
the thickness of the outer layer is from 0.01 to 0.5 mm.

8. Foil according to any of Claims 1 to 7,
**characterized in that** it
is produced via extrusion, coextrusion, or lamination, and is then, if appropriate, formed.

9. Use of a molding composition which in essence is composed of the following components:
a) from 3 to 50% by weight of a polyamide, selected from the group of PA11 and PA12, and
b) from 50 to 97% by weight of a polyamide, selected from the group of PA1012 and PA1212,
where the percentages are based on the entirety of components a) and b),
for production of a foil according to any of Claims 1 to 8.

10. Composite part, composed of a foil according to any of Claims 1 to 8 and of a substrate.

11. Composite part according to Claim 10,
**characterized in that** it
is a bodywork part of a motor vehicle, a constituent of the motor-vehicle interior, a cladding, a decorative strip, a cover strip, a panel, or a decorative element.

12. Composite part according to Claim 10 or 11,
**characterized in that** it
is produced via adhesive-bonding, pressing, lamination, or coextrusion, or via reverse coating by an injection-molding, foaming, or compression-molding method.

## Revendications

1. Feuille, dont la couche de couverture consiste en une masse moulable, qui consiste essentiellement en les composants suivantes :
a) 3 à 50 % en poids d'un polyamide, choisi parmi le groupe des PA11 et PA12, ainsi que
b) 50 à 97 % en poids d'un polyamide, choisi parmi le groupe des PA1012 et PA1212,
les données en pourcentage se rapportant à la somme des composants a) et b).

2. Feuille selon la revendication 1, qui consiste seulement en cette couche.

3. Feuille selon la revendication 1, qui consiste en plusieurs couches.

4. Feuille selon la revendication 3, **caractérisée en ce qu'**elle contient une couche colorée, une couche support et/ou une couche auxiliaire d'adhérence.

5. Feuille selon la revendication 4, **caractérisée en ce que** la couche colorée et/ou la couche support contiennent un élastomère polyamide ou un caoutchouc résilient.

6. Feuille selon l'une des revendications précédentes, **caractérisée en ce qu'**elle présente une épaisseur allant de 0,02 à 1,2 mm.

7. Feuille selon l'une des revendications 1 ainsi que 3 à 6, **caractérisée en ce que** la couche de couverture présente une épaisseur allant de 0,01 à 0,5 mm.

8. Feuille selon l'une des revendications 1 à 7,
**caractérisée en ce qu'**elle est préparée par extrusion, coextrusion ou stratification et ensuite, elle est le cas échéant reformée.

9. Utilisation d'une masse moulable, qui consiste essentiellement en les composants suivantes :
a) 3 à 50 % en poids d'un polyamide, choisi parmi le groupe des PA11 et PA12, ainsi que
b) 50 à 97 % en poids d'un polyamide, choisi parmi le groupe des PA1012 et PA1212,
les données en pourcentage se rapportant à la somme des composants a) et b),
pour la préparation d'une feuille selon l'une des revendications 1 à 8.

10. Pièce composite, constituée d'une feuille selon l'une des revendications 1 à 8 et d'un substrat.

11. Pièce composite selon la revendication 10, **caractérisée en ce qu'**elle est une pièce de carrosserie d'un véhicule automobile, un constituant de l'espace intérieur d'un véhicule automobile, un habillage, un enjoliveur, un pare-soleil, un panneau ou un élément de décoration.

12. Pièce composite selon l'une des revendications 10 et 11, **caractérisée en ce qu'**elle est préparée par collage, compression, stratification, coextrusion, pulvérisation de doublage, moussage de doublage ou pressage de doublage.
